# EUROPEAN PATENT SPECIFICATION

(11) **EP 3 768 959 B1**
(45) Date of publication and mention of the grant of the patent: **08.01.2025**
(21) Application number: 19721065.1
(22) Date of filing: 22.03.2019
(51) Int. Cl.: F02D 41/02, F02D 41/12, F02D 41/14

(54) **METHOD FOR MANAGING A FUEL SUPPLY OF A SPARK IGNITION INTERNAL COMBUSTION ENGINE AND A SUPPLY SYSTEM IMPLEMENTING SAID METHOD**
VERFAHREN ZUR VERWALTUNG EINER BRENNSTOFFZUFUHR EINER FREMDGEZÜNDETEN BRENNKRAFTMASCHINE UND ZUFUHRSYSTEM ZUR DURCHFÜHRUNG DES BESAGTEN VERFAHRENS
PROCÉDÉ DE GESTION D'UNE ALIMENTATION EN CARBURANT D'UN MOTEUR À COMBUSTION INTERNE À ALLUMAGE PAR ÉTINCELLE ET SYSTÈME D'ALIMENTATION METTANT EN OEUVRE LEDIT PROCÉDÉ

(30) Priority: 22.03.2018 IT 201800003891
(43) Date of publication of application: 27.01.2021
(73) Proprietor: FPT Industrial S.p.A., 10156 Torino (IT)
(72) Inventor: CARO, Marcello, 10156 Torino (TO) (IT); AIMAR, Bruno, 12040 Margarita (CN) (IT); BRUCATO, Aldo, 10156 Torino (TO) (IT)
(74) Representative: Studio Torta S.p.A.
(86) International application number: PCT/IB2019/052350
(87) International publication number: WO 2019/180678

(56) References cited:
- WO-A1-2015/181623
- JP-A- 2005 076 496
- JP-A- 2005 264 751
- US-A1- 2012 067 030
- US-A1- 2016 097 337
- US-B1- 6 363 316

## Description

### Technical field of the invention

The invention relates to the field of methods and systems for managing a fuel supply of a spark ignition engine.

### State of the art

In spark ignition engines, also known as Otto engines, the respect of the stoichiometric ratio is crucial in order to observe the limits set by laws on polluting emissions.

In spark ignition stoichiometric engines, an exhaust gas after-treatment device (ATS) is used, which is based on a so-called "three-way catalyst" (3WC), which is capable of capturing and storing the oxygen present in the exhaust gases (O2) and, hence, has a so-called "Oxygen storage" capacity.

By controlling the supply of fuel to the internal combustion engine between rich and lean mixture, the catalyst is forced to alternatively operate either in an oxidizing mode or in a reducing mode, thus burning unburned CO and HC or reducing NOx.

In order for this alternation between oxidizing mode and reducing mode to be carried out, the oxygen storage of the three-way catalyst, hereinafter simply referred to as "catalyst", must be kept at an intermediate value of a relative maximum storage capacity, so that O2 can be stored in the presence of an oxygen-rich gas mixture and so that O2 can be released in the presence of an oxygen-poor gas mixture.

The fuel supply of the internal combustion engine can be operated by means of a closed loop control, which uses a lambda sensor as a feedback signal in order to obtain a correct air/fuel ratio (A/F).

Indeed, the efficiency with which the oxidation-reduction reactions take place in the catalyst depends on the stoichiometric ratio with which the mixture is burned in the engine and on the temperature of the catalyst itself. Linear lambda sensors can be used, which are precise and fast, allow the fuel supply of the internal combustion engine to be properly corrected and ensure the stoichiometry of the combustion.

Binary lambda sensors can also be used, which are commonly known as "ON/OFF sensors". Unlike linear sensors, they do not need a dedicated hardware and their implementation is definitely cheaper.

ON/OFF sensors are capable of producing, as feedback, a mere switching between a high level and a low level of the signal, exceeding a predetermined positive and negative threshold of the air/fuel ratio (A/F).

Therefore, the control plan involves the implementation of an A/F forcing factor, which modulates the supply of fuel, increasing or decreasing the quantity of fuel injected into the cylinders, so as to alternatively cause the combustion taking place in the cylinder to lack oxygen or have excess oxygen.

Therefore, the three-way catalyst is forced to work on a stoichiometric condition, in a bi-stable situation, namely continuously oscillating between an oxidizing operation and a reducing operation.

Examples of this concept can be found in US2008319634, WO2010097267 and WO 2015/181623 A1.

When the accelerator is released, the engine is not supplied with fuel. This is commonly known as engine "cut-off", since the supply of fuel to the engine is "cut-off". In these conditions, the air pumped by the internal combustion engine flows through the ATS and, hence, the catalyst. Therefore, its oxygen storage capacity tends to saturate.

When the fuel starts being injected again, the catalyst is forced to work in conditions that are not ideal and, therefore, the combustion must be temporarily altered, enriching it, in order to allow the catalyst to alternate between the reducing mode and the oxidizing mode.

A known strategy involves continuously enriching the mixture for a predetermined amount of time with a duration that is fixed and previously calculated depending on the volume of the catalyst, i.e. On its geometry.

This solution, though, is affected by some drawbacks because it suffers from some undesired effects, such as chugging and wear of the catalyst.

### Summary of the invention

The object of the invention is to provide a method for managing a fuel supply of a spark ignition engine, which is capable of better dealing with the consequences of a cut-off .

The idea on which the invention is based is that of calculating an excess oxygen stored in the three-way catalyst relative to an optimum storage value, caused by a cut-off condition, and, at the end of the cut-off condition, determining and enrichment of the air/fuel ratio to neutralize said excess oxygen.

Generally speaking, the fuel supply of the internal combustion engine is carried out oscillating between a lean-burn condition and a rich-burn condition, around the air/fuel stoichiometric ratio (A/F). Therefore, said adjustment can preferably be carried out by extending the rich-burn times relative to the lean-burn times.

The intensity of the enrichment is also preferably controlled so as to always be greater than the leaning.

In other words, relative to a stoichiometric ratio, the fuel variation in a rich operating condition is greater than the fuel variation in a lean operating condition.

An "excess oxygen" evidently needs to be evaluated in relation to an ideal oxygen storage condition, which, as already mentioned above, is a mean storage condition between saturated and empty.

According to the invention, the excess oxygen is all the oxygen stored during the cut-off.

This oxygen is calculated based on the total volume of air taken in by the engine during the cut-off. To this aim, the total volume of air taken in can be measured by means of an air mass flow measuring device, which is arranged along the intake manifold, or can be estimated by assuming that the engine acts like a volumetric pump.

Then, a coefficient is applied, which converts said total air volume flowing through the catalyst into oxygen actually held back in the catalyst. Said coefficient can take into account the efficiency of the catalyst and, therefore, can be a function of operating parameters, such as for example the temperature thereof.

The corrective coefficient can also take into account the ageing of the catalysts.

When dealing with a control carried out by means of a processing unit and of electric injectors, the quantity of fuel clearly corresponds to an electric control signal of the injectors.

The (electric) control signal of the injectors injecting fuel into the cylinders depends on the air/fuel ratio value towards which the aforesaid forcing factor causes the controller to converge.

If the alternating character of the control of the fuel supply of the internal combustion engine is not changed, the stay time of the rich phase can preferably be greater than the stay time of the lean phase, thus obtaining a polarization of the engine fuel supply control.

The subject-matter of the invention comprises a method for managing a fuel supply of a spark ignition internal combustion engine and a fuel supply system implementing said method, besides a terrestrial vehicle or a fixed installation, for example for the generation of power, provided with a spark ignition internal combustion engine implementing the aforesaid method.

### Brief description of the figures

Further objects and advantages of the invention will be best understood upon perusal of the following detailed description of an embodiment thereof (and of relative variants) with reference to the accompanying drawings merely showing non-limiting examples, wherein:
figure 1 schematically shows a spark ignition internal combustion engine provided with relative supply means and with an exhaust line, along which there are arranged a three-way catalyst and a binary lambda sensor according to the invention;
figure 2 shows a time diagram of the switchings due to the implementation of a binary lambda sensor and of the method according to the invention;
figures 3 and 4 show two flowcharts implementing as many preferred variants of the method according to the invention.

In the figures, the same numbers and the same reference letters indicate the same elements or components.

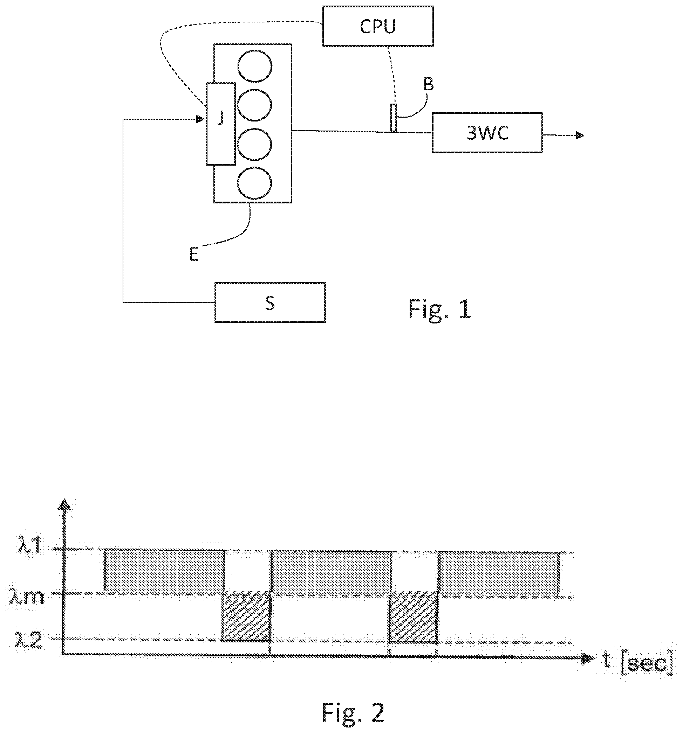

The blocks of figure 2 represented with a broken line are to be considered as optional.

The broken-line connections of figure 1 represent analogue or digital electric lines.

For the purposes of the invention, the term "second" component does not imply the presence of a "first" component. As a matter of fact, these terms are only used for greater clarity and should not be interpreted in a limiting manner.

### Detailed description of embodiments

Figure 1 schematically shows a spark ignition internal combustion engine E provided with supply means J, for example fuel injectors.

The engine E is provided with an exhaust line, along which a three-way catalyst 3WC is housed. Upstream of the catalyst there is, along the exhaust line, a lambda sensor, preferably - though not necessarily - a binary lambda sensor B, which is designed to produce a feedback on the combustion of the internal combustion engine. When the sensor is a binary sensor, it switches between two logical conditions indicating a lean-burn condition and a rich-burn condition, respectively.

A processing unit CPU monitors the control of the internal combustion engine E and, in particular, controls the injection of fuel into the cylinders of the engine by means of relative injectors J, which are supplied with fuel by a tank S.

Said processing unit CPU implements a closed-loop control over said lambda sensor, thus causing the fuel supply of the internal combustion engine to continuously oscillate around the air/fuel stoichiometric ratio A/F so as to force the catalyst to alternately oscillate between an oxidizing phase and a reducing phase. This operation is carried out at least until a cut-off procedure takes place and, therefore, the storage of oxygen in the catalyst is assumed to be in ideal conditions.

The processing unit, according to the invention, upon detection of the cut-off, calculates the air flowing through the engine and estimates the consequent variation in the oxygen storage in the catalyst.

Consequently, the processing unit enriches the combustion so as to make up for said variation in the oxygen storage, thus taking it back to a condition prior to the cut-off.

The enrichment is preferably carried out by polarizing the lean-burn/rich-burn alternations. In other words, the stay time of the rich-burn condition is greater than the stay time of the lean-burn condition.

Owing to the above, the control plan is polarized, which means that it has a mean value which differs from the A/F stoichiometric ratio until the oxygen storage is restored to the aforesaid intermediate storage condition.

The aforesaid intermediate condition preferably coincides with approximately 50% of the total O2 storage capacity.

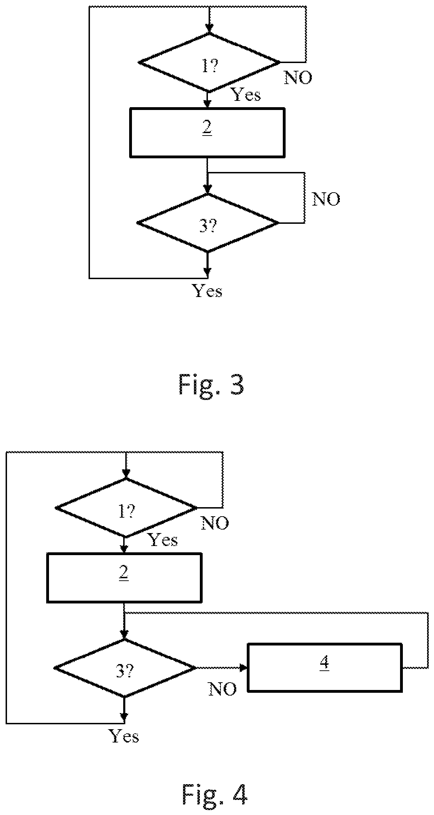

Figure 3 shows an example of a flowchart implementing the invention:
- In step 1, the system continuously checks whether a cut-off condition occurs and, if so (yes), it carries out
- Step 2, during which the excess oxygen stored in the catalyst during the cut-off procedure is calculated and which is followed by
- Step 3, during which the air-fuel ratio is enriched until neutralization of the excess oxygen.

When the cut-off conditions lasts for a long time, for example due to a long downhill path, the catalyst can saturate, which means that it can reach the maximum oxygen storage possible.

Therefore, the method takes into account the maximum storage capacity of the catalyst in order to then carry out the aforesaid polarization within the limits of the excess oxygen actually stored in the catalyst.

This advantageously avoids overestimating the excess oxygen to be neutralized.

By excess oxygen we mean the quantity, expressed in volume or moles, of oxygen exceeding the aforesaid intermediate storage condition.

When the time needed to restore the oxygen storage is insufficient due to a new following cut-off, the method, according to a preferred variant of the invention, calculates the quantity of oxygen stored in the catalyst, through integration. In other words, the excess oxygen estimate is carried out in an integrative manner on consecutive cut-off conditions, taking into account enrichment operations that are alternated with the cut-off conditions.

Figure 4 shows a variant of figure 3, in which step 4 is added, during which a residual excess oxygen value is stored, as the excess oxygen is progressively eliminated. This evidently takes into account a new cut-off procedure which might prematurely interrupt step 3.

This advantageously avoids underestimating the excess oxygen to be neutralized.

If different consecutive cut-off procedures cause the catalyst to saturate, what described above evidently applies.

The fuel supply managing method according to the invention preferably comprises a proportional/integral closed-loop control over a signal for example a binary signal (ON/OFF), generated by the binary lambda sensor arranged upstream of the catalyst 3WC, the method comprising a procedure for continuously changing an air/fuel ratio between a lean-burn condition and a rich-burn condition and vice versa. The method comprises a procedure for detecting a cut-off condition, for calculating an excess oxygen stored in the cut-off condition relative to a predetermined optimum threshold and for controlling the supply of fuel to the internal combustion engine, after the end of the aforesaid cut-off condition, so as to neutralize said excess oxygen. Figure 2 shows a diagram of a supply signal of the internal combustion engine over time.

λm indicates an A/F stoichiometric ratio condition with ends λ1 and λ2, between which the engine and, with it, also the relative catalyst are caused to oscillate. According to the invention, the A/F ratio is polarized towards a rich combustion by extending the stay time of the rich condition relative to the stay time of the lean condition. This all happens while the engine keeps oscillating between a lean combustion and a rich combustion.

Figure 2 clearly shows that the hatched area above λm are significantly larger than the hatched areas under λm.

The intensity of the enrichment can also be preferably controlled so as to be greater than the leaning; therefore, with reference to figure 2, this means that the difference | λ1 - λm | is greater than | λm - λ2 | , unlike what is shown in figure 2.

In other words, relative to a stoichiometric ratio, the fuel variation in a rich operating condition is greater than the fuel variation in a lean operating condition.

This all happens while the engine keeps oscillating between a lean combustion and a rich combustion.

The closed-loop control, which is based on the binary signal generated by the binary lambda sensor, preferably determines oscillations around a reference value of the nominal stoichiometry, which was previously stored or calculated in the processing unit, until the correct oxygen storage is restored.

The processing unit preferably implements a closed-loop control scheme with a proportional and integrative controller PI on the feedback branch, as suggested by the prior art documents concerning spark ignition Otto engines. This scheme, though, is changed as described above.

The A/F ratio reference value is an ideal value, since it depends on an ideal fuel.

The variation in the stored oxygen caused by the cut-off is preferably estimated by integrating the air flow flowing through the engine upon cut-off and by multiplying it by a conversion coefficient, which takes into account the capacity of the catalyst to hold back the oxygen contained in the air flow flowing through it.

In the absence of an air mass flow measuring device arranged along the intake manifold of the engine, the internal combustion engine can be assumed to act like an ideal volumetric pump.

This invention can be advantageously implemented by means of a computer program comprising encoding means for carrying out one or more steps of the method, when the program is run on a computer. Therefore, the scope of protection is extended to said computer program and, furthermore, to means that can be read by a computer and comprise a recorded message, said means that can be read by a computer comprising program encoding means for carrying out one or more steps of the method, when the program is run on a computer.

The non-limiting example described above can be subjected to variations, without for this reason going beyond the scope of protection of the invention, comprising all equivalent embodiments for a person skilled in the art. When reading the description above, a skilled person can carry out the subject-matter of the invention without introducing further manufacturing details. The elements and features contained in the different preferred embodiments, drawings included, can be combined with one another, without for this reason going beyond the scope of protection of this patent application. The information contained in the part concerning the state of art only serves the purpose of better understanding the invention and does not represent a declaration of existence of the items described. Furthermore, if not specifically excluded by the detailed description, the information contained in the part concerning the state of art should be considered as an integral part of the invention.

## Claims

1. A method for managing a fuel supply of a spark ignition internal combustion engine (E), the engine (E) being provided with
+ a fuel supply system (J) suitable for dosing fuel in response to a supply signal,
+ a three-way catalyst (3WC) connected to an exhaust manifold of the internal combustion engine having a predetermined oxygen storage capacity,
the method comprising a procedure for controlling said combustion so as to alternately oscillate between a lean-burn condition and a rich-burn condition, at least when the catalyst is in a condition of optimal oxygen storage,
the method comprising the following steps:
- a first step (1) for detecting a cut-off condition, wherein a fuel injection is inhibited,
- a second step (2), upon detection of the cut-off condition, for calculating an excess oxygen stored in said catalyst during the cut-off condition with respect to said optimal oxygen storage, on the basis of a calculation of air ingested by said internal combustion engine (E) during said cut-off condition;
- a third step (3) for controlling said fuel supply of the internal combustion engine, at the end of said cut-off condition, so as to neutralize exclusively said excess oxygen with respect to said optimum storage value,
wherein said neutralization of said excess oxygen is achieved by increasing the rich-burn time with respect to the lean-burn time during said alternate oscillation between said lean-burn condition and said rich-burn condition or by enriching, during said rich-burn condition, more than leaning during said lean-burn condition.

2. The method according to claim 1, wherein said optimum storage value is between 40 - 60% of a catalyst maximum storage capacity, preferably greater than 50%.

3. The method according to any of the preceding claims, wherein said control of the engine fuel supply is achieved in closed loop on the basis of a signal generated by a lambda probe (L), arranged immediately upstream of said catalyst (3WC), for returning a measurement of an air/fuel ratio (A/F).

4. The method according to claim 3, wherein said lambda probe is of the binary type and is adapted to switch between two logic conditions indicating lean and rich burn, respectively.

5. The method according to any of the preceding claims, wherein said calculation of air ingested by said internal combustion engine is based on a model of the internal combustion engine functioning as an ideal volumetric pump.

6. The method according to any one of the preceding claims, wherein said excess oxygen estimate is carried out in an integrative manner on consecutive cut-off conditions, taking into account enrichment operations that alternate the cut-off conditions.

7. A system for managing a fuel supply of an internal combustion engine provided with a
+ a fuel supply system (J) suitable for dosing fuel in response to a supply signal,
+ a three-way catalyst (3WC) connected to an exhaust manifold of the internal combustion engine,
**characterized in that** said managing system comprises a processing unit (CPU), configured for performing all the steps of any one of the claims 1 - 2 and 5 - 6.

8. The system according to claim 7, further comprising a lambda probe (L), arranged immediately upstream of said catalyst (3WC), for returning a measurement of an air/fuel ratio (A/F) and wherein said processing unit is further configured for performing said control of the internal combustion engine in closed loop on the basis of said measurement of said air/fuel ratio (A/F).

9. The system according to claim 8, wherein said lambda probe is of the binary type and is adapted to switch between two logic conditions indicating lean and rich burn, respectively.

10. vehicle or a fixed installation provided with
+ an internal combustion engine (E) having a fuel supply system (J) suitable for dosing fuel in response to a supply signal,
+ a three-way catalyst (3WC) connected to an exhaust manifold of the internal combustion engine,
+ a system for managing a fue1 supply of said internal combustion engine according to any of the claims 7-9.

## Patentansprüche

1. Verfahren für das Management der Kraftstoffzufuhr einer Fremdzündungs-Brennkraftmaschine (E), wobei die Kraftmaschine (E) Folgendes umfasst:
+ ein Kraftstoffzufuhrsystem (J), das zum Dosieren von Kraftstoff in Reaktion auf ein Zufuhrsignal geeignet ist, und
+ einen Dreiwegekatalysator (3WC), der mit einem Abgasverteiler der Brennkraftmaschine verbunden ist und eine vorgegebene Sauerstoffspeicherkapazität aufweist, wobei
das Verfahren eine Prozedur zum Steuern der Verbrennung derart umfasst, dass sie mindestens dann, wenn der Katalysator in einem Zustand eines optimalen Sauerstoffspeichers ist, zwischen einem Zustand einer mageren Verbrennung und einem Zustand einer fetten Verbrennung abwechselnd oszilliert, wobei
das Verfahren die folgenden Schritte umfasst:
- einen ersten Schritt (1) zum Detektieren eines Abschaltzustands, in dem eine Kraftstoffeinspritzung gehemmt wird,
- einen zweiten Schritt (2) nach einer Detektion des Abschaltzustands zum Berechnen von überschüssigem Sauerstoff, der während des Abschaltzustands im Katalysator gespeichert wird, in Bezug auf den optimalen Sauerstoffspeicher auf der Grundlage einer Berechnung der Luft, die während des Abschaltzustands durch die Brennkraftmaschine (E) aufgenommen wird; und
- einen dritten Schritt (3) zum Steuern der Kraftstoffzufuhr der Brennkraftmaschine am Ende des Abschaltzustands, um ausschließlich den überschüssigen Sauerstoff in Bezug auf den optimalen Speicherwert zu neutralisieren, wobei die Neutralisierung des überschüssigen Sauerstoffs durch Erhöhen der Zeit fetter Verbrennung in Bezug auf die Zeit magerer Verbrennung während der abwechselnden Oszillation zwischen dem Zustand magerer Verbrennung und dem Zustand fetter Verbrennung oder durch stärkeres Anreichern während des Zustands fetter Verbrennung als Abreichern während des Zustands magerer Verbrennung erreicht wird.

2. Verfahren nach Anspruch 1, wobei der optimale Speicherwert im Bereich von 40-60 % einer Katalysatormaximalspeicherkapazität, bevorzugt größer als 50 % ist.

3. Verfahren nach einem der vorhergehenden Ansprüche, wobei die Steuerung der Kraftmaschinenkraftstoffzufuhr in einem geschlossenen Regelkreis auf der Grundlage eines Signals erreicht wird, das durch eine Lambdasonde (L), die unmittelbar stromaufwärts des Katalysators (3WC) angeordnet ist, zum Zurückführen eines Messwerts eines Luft/Kraftstoff-Verhältnisses (A/F) erzeugt wird.

4. Verfahren nach Anspruch 3, wobei die Lambdasonde vom Binärtyp ist und ausgelegt ist, zwischen zwei Logikzuständen umzuschalten, die magere bzw. fette Verbrennung angeben.

5. Verfahren nach einem der vorhergehenden Ansprüche, wobei die Berechnung von Luft, die durch die Brennkraftmaschine aufgenommen wird, ein Modell der Brennkraftmaschine, die als eine ideale volumetrische Pumpe arbeitet, als Grundlage verwendet.

6. Verfahren nach einem der vorhergehenden Ansprüche, wobei die Schätzung überschüssigen Sauerstoffs in einer integrativen Weise in aufeinanderfolgenden Abschaltzuständen unter Berücksichtigung von Anreicherungsoperationen, die die Abschaltzustände abwechseln, ausgeführt wird.

7. System für das Management einer Kraftstoffzufuhr einer Brennkraftmaschine, das mit Folgendem versehen ist:
+ einem Kraftstoffzufuhrsystem (J), das zum Dosieren von Kraftstoff in Reaktion auf ein Zufuhrsignal geeignet ist, und
+ einem Dreiwegekatalysator (3WC), der mit einem Abgasverteiler der Brennkraftmaschine verbunden ist,
**dadurch gekennzeichnet, dass** das Managementsystem eine Verarbeitungseinheit (CPU) umfasst, die zum Durchführen aller Schritte nach einem der Ansprüche 1-2 und 5-6 konfiguriert ist.

8. System nach Anspruch 7, das ferner eine Lambdasonde (L), die unmittelbar stromaufwärts des Katalysators (3WC) angeordnet ist, zum Zurückführen eines Messwerts eines Luft/Kraftstoff-Verhältnisses (A/F) umfasst, wobei die Verarbeitungseinheit ferner zum Durchführen der Steuerung der Brennkraftmaschine in einem geschlossenem Regelkreis auf der Grundlage des Messwerts des Luft/Kraftstoff-Verhältnisses (L/K) konfiguriert ist.

9. System nach Anspruch 8, wobei die Lambdasonde vom Binärtyp ist und ausgelegt ist, zwischen zwei Logikzuständen umzuschalten, die magere bzw. fette Verbrennung angeben.

10. Fahrzeug oder feste Installation, das bzw. die Folgendes umfasst:
+ eine Brennkraftmaschine (E), die ein Kraftstoffzufuhrsystem (J) aufweist, das zum Dosieren von Kraftstoff in Reaktion auf ein Zufuhrsignal geeignet ist,
+ einen Dreiwegekatalysator (3WC), der mit einem Abgasverteiler der Brennkraftmaschine verbunden ist, und
+ ein System für das Management der Kraftstoffzufuhr der Brennkraftmaschine nach einem der Ansprüche 7-9.

## Revendications

1. Méthode de gestion d'une alimentation en carburant d'un moteur (E) à combustion interne à allumage commandé, le moteur (E) étant pourvu
+ d'un système d'alimentation en carburant (J) convenable pour doser du carburant en réponse à un signal d'alimentation,
+ d'un catalyseur à trois voies (3WC) relié à un collecteur d'échappement du moteur à combustion interne ayant une capacité de stockage d'oxygène prédéterminée, la méthode comprenant une procédure de commande de ladite combustion de façon à osciller alternativement entre une condition de mélange pauvre et une condition de mélange riche, au moins lorsque le catalyseur est dans une condition de stockage d'oxygène optimal,
la méthode comprenant les étapes suivantes :
- une première étape (1) pour détecter une condition de coupure, dans laquelle une injection de carburant est inhibée,
- une deuxième étape (2), lors de la détection de la condition de coupure, pour calculer un excès d'oxygène stocké dans ledit catalyseur pendant la condition de coupure par rapport audit stockage d'oxygène optimal, sur la base d'un calcul d'air ingéré par ledit moteur (E) à combustion interne pendant ladite condition de coupure ;
- une troisième étape (3) pour commander ladite alimentation en carburant du moteur à combustion interne, à la fin de ladite condition de coupure, de façon à neutraliser exclusivement ledit excès d'oxygène par rapport à ladite valeur de stockage optimum,
dans laquelle ladite neutralisation dudit excès d'oxygène est accomplie par augmentation du temps de mélange riche par rapport au temps de mélange pauvre pendant ladite oscillation alternée entre ladite condition de mélange pauvre et ladite condition de mélange riche ou par enrichissement, pendant ladite condition de mélange riche, plus que par appauvrissement pendant ladite condition de mélange pauvre.

2. Méthode selon la revendication 1, dans laquelle ladite valeur de stockage optimum est entre 40 à 60 % d'une capacité de stockage maximale de catalyseur, de préférence supérieure à 50 %.

3. Méthode selon l'une quelconque des revendications précédentes, dans laquelle ladite commande de l'alimentation en carburant de moteur est accomplie en boucle fermée sur la base d'un signal généré par une sonde lambda (L) , agencée immédiatement en amont dudit catalyseur (3WC), pour renvoyer une mesure d'un rapport air/carburant (A/F).

4. Méthode selon la revendication 3, dans laquelle ladite sonde lambda est du type binaire et est adaptée pour basculer entre deux conditions logiques indiquant respectivement un mélange pauvre et un mélange riche.

5. Méthode selon l'une quelconque des revendications précédentes, dans laquelle ledit calcul d'air ingéré par ledit moteur à combustion interne est basé sur un modèle du moteur à combustion interne fonctionnant comme une pompe volumétrique idéale.

6. Méthode selon l'une quelconque des revendications précédentes, dans laquelle ladite estimation d'excès d'oxygène est réalisée de manière intégrative sur des conditions de coupure consécutives, en tenant compte des opérations d'enrichissement qui alternent les conditions de coupure.

7. Système de gestion d'une alimentation en carburant d'un moteur à combustion interne pourvu
+ d'un système d'alimentation en carburant (J) convenable pour doser du carburant en réponse à un signal d'alimentation,
+ d'un catalyseur à trois voies (3WC) relié à un collecteur d'échappement du moteur à combustion interne, **caractérisé en ce que** ledit système de gestion comprend une unité de traitement (CPU), configurée pour effectuer toutes les étapes de l'une quelconque des revendications 1 et 2 et 5 et 6.

8. Système selon la revendication 7, comprenant en outre une sonde lambda (L), agencée immédiatement en amont dudit catalyseur (3WC), pour renvoyer une mesure d'un rapport air/carburant (A/F) et dans lequel ladite unité de traitement est en outre configurée pour effectuer ladite commande du moteur à combustion interne en boucle fermée sur la base de ladite mesure dudit rapport air/carburant (A/F).

9. Système selon la revendication 8, dans lequel ladite sonde lambda est du type binaire et est adaptée pour basculer entre deux conditions logiques indiquant respectivement un mélange pauvre et un mélange riche.

10. Véhicule ou installation fixe pourvu(e)
+ d'un moteur (E) à combustion interne ayant un système d'alimentation en carburant (J) convenable pour doser du carburant en réponse à un signal d'alimentation,
+ d'un catalyseur à trois voies (3WC) relié à un collecteur d'échappement du moteur à combustion interne, + d'un système de gestion d'une alimentation en carburant dudit moteur à combustion interne selon l'une quelconque des revendications 7 à 9.
